(19) Europäisches Patentamt
European Patent Office
Office européen des brevets

(11) **EP 2 256 366 B1**

(12) **FASCICULE DE BREVET EUROPEEN**

(45) Date de publication et mention
de la délivrance du brevet:
**07.12.2011 Bulletin 2011/49**

(51) Int Cl.:
**F16G 5/20** *(2006.01)*    **B29D 29/10** *(2006.01)*

(21) Numéro de dépôt: **10009850.8**

(22) Date de dépôt: **17.11.2005**

(54) **Courroie extensible presentant un cablé en polyamide 6.6, notamment pour application automobile**

Dehnbarer Riemen mit einem aus Polyamid 6.6 Verstärkungseil, insbesondere zur Anwendung in Automobilen

Stretchable belt with a polyamide 6.6 cord, especially for automotive use

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **08.12.2004 FR 0413057**

(43) Date de publication de la demande:
**01.12.2010 Bulletin 2010/48**

(62) Numéro(s) de document de la (des) demande(s) initiale(s) en application de l'article 76 CBE:
**05292437.0 / 1 669 637**

(73) Titulaire: **Hutchinson**
**75008 Paris (FR)**

(72) Inventeurs:
- **Rognon, Julie**
  **37540 Saint Cyr Sur Loire (FR)**
- **Varin, Hervé**
  **37300 Joue-Les-Tours (FR)**

(74) Mandataire: **Jacquard, Philippe Jean-Luc et al**
**Cabinet ORES**
**36, rue de St Pétersbourg**
**75008 Paris (FR)**

(56) Documents cités:
**EP-A- 0 339 249    EP-A- 1 043 517**

**Description**

La présente invention a pour objet une courroie extensible à nervures en V présentant un câblé en polyamide 6.6, destinée à des applications à des véhicules automobiles.

L'intérêt de ces courroies connues également sous la dénomination anglo-saxonne de "snap-on" est qu'elles peuvent être montées par simple extension. Après mise en place, elles sont capables, contrairement aux courroies dites "standard", de conserver une tension de service suffisante pour ne pas nécessiter la présence d'un tendeur fixe.

Des courroies extensibles ayant un câblé en polyamide 6.6 sont déjà utilisées pour la transmission de puissance dans des appareils électro-ménagers tels que des lave-linge, pour lesquels la puissance entraînée ($\leq$ 1 kW) et l'acyclisme sont faibles.

Ces courroies présentent un module dynamique faible, qui les rend incompatibles avec des applications automobiles, pour lesquelles les puissances sont plus élevées et dans lesquelles on rencontre des phénomènes d'acyclisme, qui sont particulièrement sévères dans le cas des moteurs Diesel.

Ce faible module dynamique est dû au fait que le polyamide 6.6 présente des performances inférieures à celles du polyamide 4.6 qui est utilisé pour former les câblés des courroies extensibles pour applications automobiles.

Les demandes de brevet EP-339 249 et EP-1043 517 concernent ainsi des courroies de transmission présentant des câblés en polyamide 6.6.

Or, le polyamide 6.6 (PA 66) est moins cher que le polyamide 4.6 (PA 46). Il est donc souhaitable de pouvoir disposer d'une courroie extensible en polyamide 6.6 qui convient aux applications automobiles, et dont les propriétés s'approchent le plus possible de performances du PA 46.

Il existe déjà sur le marché des courroies automobiles à câblé en polyamide 6.6, mais leur module dynamique est nettement inférieur à celui des courroies à câblé en polyamide 4.6, ainsi que le montre l'Exemple comparatif plus loin dans la description.

De plus, ces courroies présentent la particularité d'une surtension à chaud S qui est négative, ce qui est défavorable, car la grande majorité du temps de fonctionnement de la courroie s'opère à chaud, et donc avec une tension plus faible que la tension nominale au repos.

L'idée de base de l'invention est de réaliser une courroie extensible à partir d'un câblé en polyamide 6.6 amélioré en modifiant les paramètres de fabrication du fil.

L'invention concerne ainsi une courroie extensible de type K pour application automobile à nervures en V selon les termes de la revendication 1.

Le module dynamique $M_{24}$ à 24 heures est avantageusement compris entre 8000 et 11000 N/dent/brin/% d'allongement, et plus particulièrement entre 8000 à 10000 N/dent/brin/% d'allongement (ou bien entre 8000 et 9500). Il peut notamment être supérieur à 8500 N/dent/brin/% d'allongement.

La courroie présente avantageusement une surtension ST positive telle que mesurée dans les conditions définies ci-après. A titre d'exemple non limitatif, cette surtension ST est au moins égale à 5% et est notamment comprise entre 5% et 20 %.

La courroie présente une détension DT, mesurée dans les conditions définies ci-après, qui est supérieure à -25%, et notamment comprise entre -25% et -10%.

Les procédés classiques de fabrication d'un fil pour câblés mettent en général en oeuvre deux étapes successives d'étirage.

Selon l'invention, le câblé est réalisé en un fil de polyamide 6.6, de diamètre par exemple compris entre 0,9 et 1, 2 mm, obtenu par un procédé dans lequel il existe au moins une étape d'étirage du câblé à une tension comprise entre 100 mN/dtex et 160 mN/dtex et à une température comprise entre 180 °C et 220°C, et plus particulièrement entre 180°C et 200°C.

L'invention sera mieux comprise à la lecture de la description ci-après, en liaison avec les dessins dans lesquels :

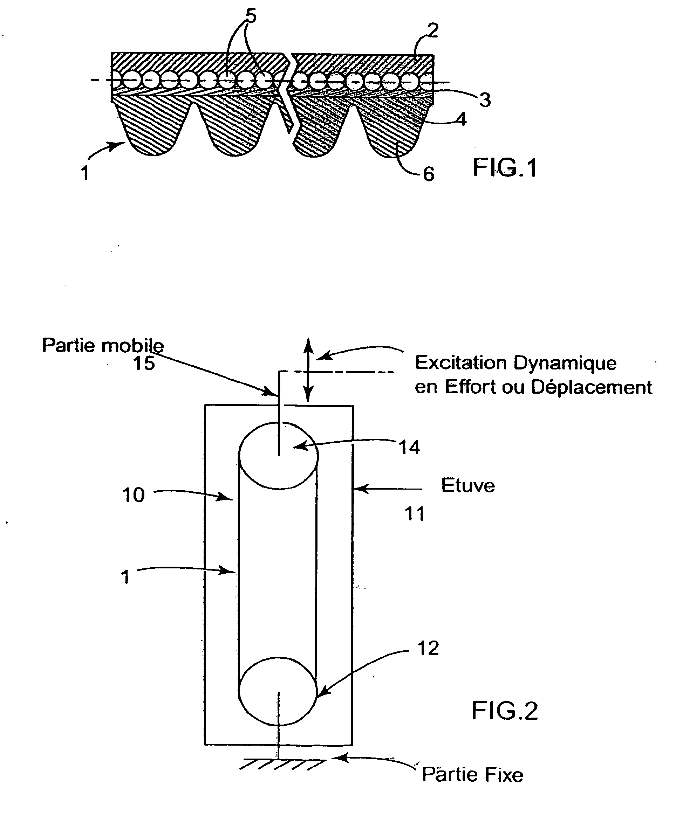

- la figure 1 est une vue en coupe d'une courroie selon l'invention ;

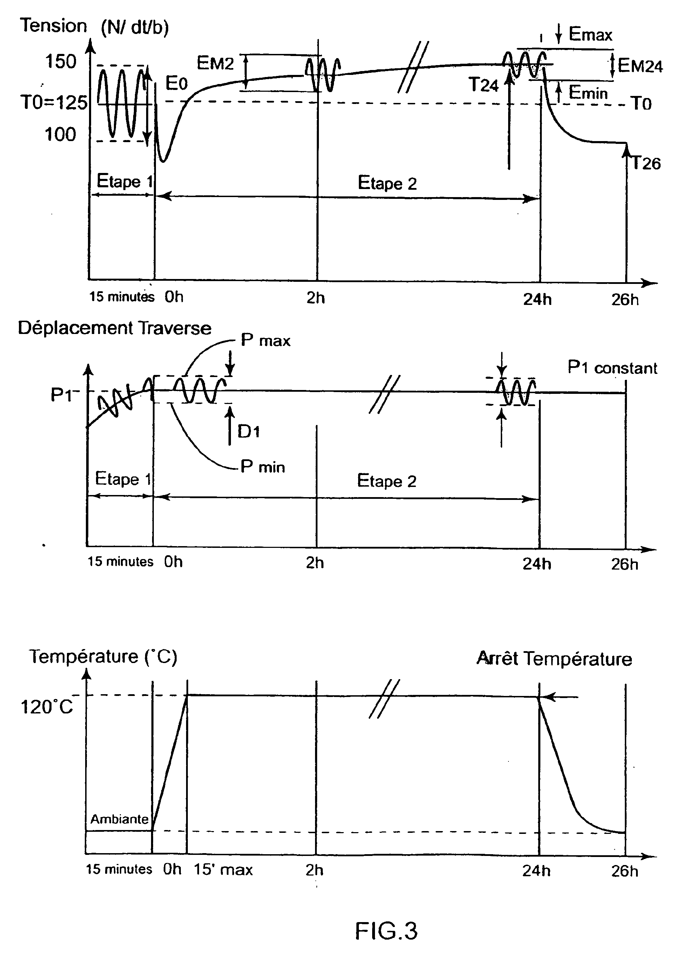

- les figures 2 et 3 illustrent la mesure de module dynamique, de la surtension et de la détension.

Une courroie 1 de type K présente de manière classique une couche externe 2 en élastomère, une couche de coussin 3 en élastomère, et une couche interne en élastomère 4 présentant des nervures 6 en V présentant un pas p normalisé de 3,56 mm. La référence 5 désigne le câblé de renforcement constitué d'un fil tressé de diamètre d qui est enroulé hélicoïdalement avec un pas p. Cet enroulement est réalisé bord à bord ou éventuellement avec un espacement.

Le câblé 5 est obtenu à partir d'un fil en polyamide 6.6. Les propriétés dynamiques du câblé sont augmentées par étirage et thermofixation au cours de son procédé de fabrication.

Au cours du procédé de fabrication du câblé, on met en oeuvre au moins une étape d'étirage du câblé, par exemple 940 x 2 x 3, à température et une tension d'étirage élevés, la température étant comprise entre180 °C et 220 °C et plus particulièrement entre 186°C et 200°C et la tension d'étirage étant comprise entre 100 mN/dtex et 160 mN/dtex.

Pour un câblé en polyamide 6.6 par exemple de même type que celui qui est déjà utilisé pour les courroies extensibles dites "à module adapté" pour machine à laver, on obtient une augmentation notable du module dynamique de la courroie, avec un module dynamique à 120 °C qui à 2 heures est supérieur à 7000 N/dent/brinl% d'allongement et à 24 heures qui est supérieur à 7700 N/dent/brin /% d'allongement, à comparer à une valeur de 3000 N/dent/brin/% d'allongement pour une courroie similaire mais qui aurait été réalisée avec ce câblé de polyamide 6.6 de l'art antérieur.

Le module dynamique à 120°C est mesuré par un essai de relaxation dynamique à chaud sur un banc d'extensomètrie tel qu'un pulsateur dynamique INSTRON 10 présentant deux poulies 12 et 14, dont une 12 est fixe et dont l'autre 14 est mobile. Le banc dynamique INSTRON permet d'appliquer à la partie mobile (traverse 15) liée à la poulie 14, une excitation dynamique soit en effort, soit en déplacement. La courroie 1 et le banc 10 sont intégrés dans une étuve 11 permettant de faire varier la température.

Ce test dynamique à chaud, qui est poursuivi pendant au moins 2 heures, mais que l'on prolonge avantageusement jusqu'à 24 heures pour stabiliser complètement la courroie, permet de déterminer un module dynamique qui est plus pertinent pour caractériser le fonctionnement d'une courroie qu'un test statique traditionnel réalisé par exemple à partir de la première courbe force allongement, ou de la cinquième courbe force allongement.

PROCEDURE DE TEST

1) On applique pendant 15 minutes à température ambiante (20°C $\pm$5) une tension de brin initiale $T_0$ de 125 N/dent/brin que l'on module par une tension dynamique variant de manière sinusoïdale, à une fréquence de 37Hz, avec une amplitude $E_0$ de 50 N/dent/brin crête à crête. Au bout de 15 minutes et avant interruption de l'effort dynamique, on relève la position moyenne P1 de la traverse du banc dynamique, qui est la demi somme des positions maximale Pmax et minimale Pmin de la traverse dus à ladite tension dynamique à l'instant t = 15 minutes, ainsi que l'amplitude de déplacement dynamique D1 de la traverse (amplitude crête à crête D1) qui est générée à l'instant t = 15 minutes par la tension dynamique de $\pm$ 25N/dent/brin (amplitude $E_0$ de 50 N/dent/brin).

Le pourcentage d'allongement D2 de la courroie qui correspond à l'amplitude de déplacement dynamique D1 de la traverse a pour valeur :

$$D2 = 2 \ (D1/L) \ x \ 100$$

L désignant la longueur effective de la courroie.

2) A la fin de l'étape 1 qui permet une stabilisation de la courroie, on positionne la traverse à la position P1 définie ci-dessus et on applique à la traverse l'amplitude de déplacement dynamique D1 définie ci-dessus. La montée en température du banc s'effectue au démarrage de l'étape 2. Elle dure au maximum 15 minutes.

L'essai dynamique est poursuivi pendant 24 heures à 120°C. On relève à un ou plusieurs instants t l'amplitude de tension dynamique $E_{Mt}$ dans un brin qui est la différence entre la tension dynamique maximale $E_{max}$ et tension dynamique minimale $E_{min}$. $E_{Mt}$ permet de calculer le module dynamique.

On déduit du rapport entre $E_{Mt}$ exprimé en N/dent/brin et D2 exprimé en % d'allongement, le module dynamique M à l'instant t qui s'exprime en N/dent/brin/% d'allongement, soit M = $E_{Mt}$/D2.

On détermine le module dynamique $M_2$ au temps t = 2 heures et $M_{24}$ au temps t = 24 heures, grâce aux amplitudes dynamiques de tension à 2 heures et à 24 heures désignés respectivement par $E_{M2}$ et $E_{M24}$.

3) Les caractéristiques de surtension ST et de détension DT de la courroie sont également déterminées au cours de l'essai.

On mesure la tension dynamique moyenne $T_{24}$ (en N/dent/brin) d'un brin de la courroie à t =24 heures (à 120 °C). On a :

$$T_{24} = (E_{max} + E_{min}/2).$$

La surtension ST exprimée en % a pour valeur :

$$ST = 100 \ (T_{24} -T_0)/T_0.$$

4) On laisse refroidir la courroie pendant deux heures en statique en maintenant la traverse à la position P1 (Etape 3) et on mesure la tension $T_{26}$ dans un brin (en N/dent/brin) au temps t = 26 heures.

La détension DT (en N/dent/brin) a pour valeur :

$$DT = 100 \ (T_{26} - T_0)/T_0.$$

ST est en général un nombre positif, alors que DT est toujours un nombre négatif.

Une courroie selon l'invention présente une surtension ST positive alors que la détension DT est supérieure à -25 % (par exemple, elle est égale à -20%).

<u>EXEMPLE I</u> : Une courroie de type K6 de longueur L = 1200 mm, présentant un câblé 940 x 2 x 3 en polyamide 6.6 (PA66) de diamètre 1 mm ayant subi deux étapes d'étirage entre 100 et 160 mN/dtex à une température comprise entre 180°C et 200°C a été soumise au test défini ci-dessus. On rappelle ici que l'amplitude $E_o$ (étape 1) est de 50 N/dt/b.

Les données relevées sont les suivantes :

| Amplitude Déplacement Dynamique traverse D1 (fin Etape 1, et conservé en Etape 2) (mm) | Amplitude Déplacement Courroie D2 (%) | Amplitude dynamique de tension dans un brin | | Tension à chaud moyenne à 24 H (N/dt/b) $T_{24}$ | Tension à ambiante à 26 H (TM (N/dt/b) $T_{26}$ |
|---|---|---|---|---|---|
| | | $E_{M2}$ à 2 H (N/dt/b) | $E_{M24}$ à 24 H (N/dt/b) | | |
| 2,247 | 0,374 | 27,2 | 33,4 | 137,5 | 100 |

Pour mémoire, la tension en N/dt/b est égale à l'effort de la traverse divisé par le nombre de dents et par 2 (à cause de la présence de deux brins et de deux poulies de même diamètre).

Pour une courroie K6 $T_0$ = 125 N/dt/b = 1500 N (Effort traverse) / 6 (nombre de dent) et / 2 brins.

Module dynamique à chaud à l'instant t $M_t$ = $EM_t$/D2, $EM_t$ désignant l'amplitude de la tension dynamique dans un brin en N/dt/b et D2 l'allongement dynamique de la courroie en %.

Dans l'exemple selon le tableau ci-dessus, on a :

$E_{M2}$ = 27,2 N/dt/b; $E_{M24}$ = 33,4 N/dt/b

D1 = 2,247 mm

L = 1200 mm

$D_2$ = 2D1/L x 100 = 200 x 2,247 /1200 = 0,374 %

$M_2$ = $E_{M2}$/D2 = 27,2/0,374 = 7270 en N/dt/b/%

$M_{24}$ = $E_{M24}$/D2 = 33,4/0,374 = 8930 en N/dt/b/%

Surtension à chaud ST (%)= 100 ($T_{24}$ - $T_0$)/ $T_0$, avec

$T_0$ = 125 N/dt/b et $T_{24}$ = 137,5 N/dt/b

ST = 100 (137,5 - 125) / 125 = 10%

Evolution de la tension dans un brin à l'ambiante ou détension DT (%) = 100 ($T_{26}$ - $T_0$)/ $T_0$, avec

$T_0$ = 125 N/dt/b et $T_{26}$ = 100 N/dt/b

DT = 100 x (100 - 125)/125 = -20%

<u>EXEMPLE COMPARATIF</u> :

| | Module dynamique à chaud | | Surtension ST à chaud (120°C) | Détension DT à température ambiante |
|---|---|---|---|---|
| | $M_2$ à 2 H (N/dt/b)% | $M_{24}$ à 24 H (N/dt/b)% | après 24 H (%) | après 26 H (%) |
| Courroie automobile à câblé en PA 4.6 | 7250 | 9330 | 20 | - 7 |

(suite)

| | Module dynamique à chaud | | Surtension ST à chaud (120°C) | Détension DT à température ambiante |
|---|---|---|---|---|
| | $M_2$ à 2 H (N/dt/b)%) | $M_{24}$ à 24 H (N/dt/b)%) | après 24 H (%) | après 26 H (%) |
| Courroie de l'Example I à câblé en PA 6.6 | 7270 | 8930 | 10 | - 20 |
| Courroie automobile en câblé en PA 6.6 | 6380 | 7730 | - 8 | - 30 |

**Revendications**

1. Courroie extensible de type K pour application automobile, à nervures en V, présentant une structure de renforcement constituée par un câblé en polyamide 6.6 et présentant un module dynamique à 120°C à 2 heures, qui est compris entre 7000 N/dent/brin/% d'allongement et 10000 N/dent/brin/% d'allongement le module étant mesuré selon le test décrit dans la description, ladite courroie présentant, et notamment comprise entre -25 % et - 10% la détention DT étant mesurée selon le test décrit dans la description.

2. Courroie selon la revendication 1, **caractérisée en ce que** ledit module dynamique à 2 heures $M_2$ est supérieur à 7200 N/dent/% d'allongement.

3. Courroie selon une des revendications 1 ou 2, **caractérisée en ce qu'**elle présente un module dynamique $M_{24}$ à 24 heures qui est compris entre 8000 N/dent/brin/% d'allongement et 11000 N/dent/brin/% d'allongement, et notamment entre 8000 et 10000 N/dent/b/1% d'allongement.

4. Courroie selon la revendication 3, **caractérisée en ce que** le module dynamique $M_{24}$ à 24 heures est compris entre 8000 et 9500 N/dent/brin/% d'allongement.

5. Courroie selon la revendication 3, **caractérisée en ce que** le module dynamique $M_{24}$ est supérieur à 8500 N/dent/brin/% d'allongement.

6. Courroie selon une des revendications précédentes, **caractérisée en ce qu'**elle présente une surtension ST positive.

7. Courroie selon une des revendications précédentes, **caractérisée en ce que** le câblé est réalisé en un fil de polyamide 6.6 et obtenu dans un procédé dans lequel il existe au moins une étape d'étirage du câblé à une tension comprise entre 100 et 160 mN/dtex, et à une température comprise entre 180°C et 220°C.

8. Courroie selon une des revendications précédentes, **caractérisée en ce que** le câblé présente un diamètre compris entre 0,9 mm et 1,2 mm.

**Claims**

1. An extensible V-ribbed automotive type K belt presenting a reinforcing structure constituted by a polyamide 6.6 cord and presenting a dynamic modulus at 120°C and at 2 h lying in the range 7000 N/t/str/% to 10,000 N/t/str/%, the module being measured according to the test described in the description, said belt presenting tension relief DT that is greater than -25% and in particular lies in the range -25% to -10%, with the tension relief DT being measured according to the test described in the description.

2. A belt according to claim 1, **characterized in that** said dynamic modulus at 2 h $M_2$ is greater than 7200 N/t/str/%.

3. A belt according to claim 1 or claim 2, **characterized in that** it presents a dynamic modulus $M_{24}$ at 24 h lying in the range 8000 N/t/str/% to 11,000 N/t/str/%, and in particular in the range 8000 N/t/str/% to 10,000 N/t/str/%.

4. A belt according to claim 3, **characterized in that** the dynamic modulus $M_{24}$ at 24 h lies in the range 8000 N/t/str/% to 9500 N/t/str/%.

5. A belt according to claim 3, **characterized in that** the dynamic modulus $M_{24}$ is greater than 8500 N/t/str/%.

6. A belt according to any preceding claim, **characterized in that** it presents extra tension ST that is positive.

7. A belt according to any preceding claim, **characterized in that** the cord is made of a polyamide 6.6 thread obtained in a method in which there exists at least one step of stretching the cord at a tension lying in the range 100 mN/dtex to 160 mN/dtex, and a temperature lying in the range 180°C to 220°C.

8. A belt according to any preceding claim, **characterized in that** the cord presents a diameter lying in the range 0.9 mm to 1.2 mm.

**Patentansprüche**

1. Dehnbarer Keilrippenriemen vom K-Typ zur Anwendung bei Kraftfahrzeugen, der einen aus einer Seileinlage aus Polyamid 6.6 bestehenden Verstärkungsaufbau aufweist, der bei 120°C über 2 h einen zwischen 7000 N/Rippe/Trum/% Längung und 10000 N/Rippe/Trum/% Längung liegenden dynamischen Elastizitätsmodul aufweist, wobei der Elastizitätsmodul gemäß der in der Beschreibung beschriebenen Prüfung gemessen wurde, und der Riemen eine Entspannung DT von mehr als -25% und insbesondere von zwischen -25% und -10% aufweist, wobei die Entspannung DT gemäß der in der Beschreibung beschriebenen Prüfung gemessen wurde.

2. Riemen nach Anspruch 1, **dadurch gekennzeichnet, dass** der dynamische Elastizitätsmodul über 2 h $M_2$ höher als 7200 N/Rippe/% Längung ist.

3. Riemen nach einem der Ansprüche 1 oder 2, **dadurch gekennzeichnet, dass** er einen dynamischen Elastizitäts-modul über 24 h $M_{24}$ aufweist, der zwischen 8000 N/Rippe/Trum/% Längung und 11000 N/Rippe/Trum/% Längung und insbesondere zwischen 8000 und 10000 N/Rippe/Trum/% Längung liegt.

4. Riemen nach Anspruch 3, **dadurch gekennzeichnet, dass** der dynamische Elastizitätsmodul über 24 h $M_{24}$ zwi-schen 8000 und 9500 N/Rippe/Trum/% Längung liegt.

5. Riemen nach Anspruch 3, **dadurch gekennzeichnet, dass** der dynamische Elastizitätsmodul $M_{24}$ höher als 8500 N/Rippe/Trum/% Längung ist.

6. Riemen nach einem der vorherigen Ansprüche, **dadurch gekennzeichnet, dass** er eine positive Überspannung ST aufweist.

7. Riemen nach einem der vorherigen Ansprüche, **dadurch gekennzeichnet, dass** die Seileinlage aus einem Faden aus Polyamid 6.6 ausgeführt ist und in einem Verfahren erhalten wird, welches zumindest einen Schritt des Verstreckens der Seileinlage bei einer zwischen 100 und 160 mN/dtex liegenden Spannung und bei einer zwischen 180°C und 220°C liegenden Temperatur beinhaltet.

8. Riemen nach einem der vorherigen Ansprüche, **dadurch gekennzeichnet, dass** die Seileinlage einen Durchmesser von zwischen 0,9 mm und 1,2 mm aufweist.

5

2

3

4

1

6

**FIG.1**

Partie mobile
15

↕ Excitation Dynamique
en Effort ou Déplacement

14

10

Etuve
11

1

12

**FIG.2**

Partie Fixe

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 339249 A

- EP 1043517 A